# EUROPEAN PATENT APPLICATION

(11) **EP 1 548 671 A1**
(43) Date of publication of application: **29.06.2005**
(21) Application number: 04029712.9
(22) Date of filing: 15.12.2004
(51) Int. Cl.: G07F 19/00, G06F 17/60

(54) **Threshold billing**

(30) Priority: 24.12.2003 US 746389
(71) Applicant: MICROSOFT CORPORATION, Redmond, Washington 98052-6399 (US)
(72) Inventor: Shyam, Bharat, Redmond Washington 98052 (US); Brennan, David J., Redmond Washington 98052 (US); Deb, Indrojit, Redmond Washington 98052 (US); Gallelli, John R., Redmond Washington 98052 (US); Yin, Jun, Redmond Washington 98052 (US); Sanches, Newton Cunha, Redmond Washington 98052 (US); Narasimhan, Rangaprasad, Redmond Washington 98052 (US); Marshall, Stuart H., Redmond Washington 98052 (US); Wang, Xingheng T., Redmond Washington 98052 (US)
(74) Representative: Grünecker, Kinkeldey, Stockmair & Schwanhäusser Anwaltssozietät

(57) **Abstract**

The present invention involves a system and method that facilitate a purchasing experience in part by consolidating any number of purchases and their respective charge amounts until the purchases or charge amounts reach a threshold level. The threshold level can be based in part on resources used (consumed or purchased) or on the corresponding monetary value. The threshold level can be determined based at least in part on several factors such as the type of resource being purchased, the volume of resources purchased at a time or over a period of time, customer's payment history, customer's usage history, feedback received from the customer's payment provider, the type of payment vehicle (*e*.*g*., credit card, stored value card), time of the purchase, etc. When the threshold is reached, payment is requested asynchronously. The customer's account can be suspended or cancelled if payment cannot be secured within a desired amount of time.

## Description

### TECHNICAL FIELD

This invention is related to systems and methods that facilitate online purchasing and in particular, that relate to billing customers based in part upon a dynamically determined threshold value.

### BACKGROUND OF THE INVENTION

The advent of global communications networks such as the Internet has presented commercial opportunities for reaching vast numbers of potential customers. In particular, online shopping and purchasing is on the rise as evidenced by increasing online retail sales. From music to greeting cards to groceries, more and more consumers are buying from Internet retailers for a variety of reasons such as convenience, selection, and pricing incentives offered only online.

However, the online shopping experience is not without its obstacles and problems. For instance, the purchasing process can be long and arduous, particularly when only wanting to buy a small number of items for a relatively small dollar amount. This is commonly referred to as per-item purchasing which is the conventional method employed today. One example of this is purchasing an online greeting card which I usually relatively inexpensive (*e.g.*, $2.00). The small cost of the item compared to the time-consuming purchasing process can result in a disincentive for current and/or returning customers.

As an alternative to the per-item billing scheme, some online retailers have implemented billing per time period, whereby customers are billed once a month or once a day, for example. However, this type of billing presents another set of problems. For example, only billing a customer once per day or month can allow the customer to purchase or download several products such as songs before it is discovered that the customer cannot pay for the "purchased" goods. Thus, the risks of non-payment and/or debt increase significantly for the retailer. Moreover, there is an unmet need for improving online purchasing from the perspectives of both the consumer and the retailer.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The present invention provides for systems and methods that allow a customer to purchase a plurality of goods and/or services (*e.g.*, download merchandise, make use of online fee services, etc.) over a period of time without being impeded by a charge process for each separate transaction. More specifically, the subject invention involves employing a threshold resource level based at least in part upon any number of parameters, which corresponds to the respective users or customers. Charges per user are essentially consolidated and stored in a queue (*e.g.*, local or non-local) or unrestricted buffer until a threshold billing amount is reached, at which point the customer's payment instrument is debited or charged. Furthermore, the present invention supports asynchronously charging a specified payment vehicle from the unrestricted buffer when a particular threshold value or level is reached.

The threshold value can be determined in part by any combination of user preferences and/or retailer-system preferences as well as the type of good or service, the quantity of units, historical data, payment instrument and/or time of "purchase" or download as well as a myriad of other factors. In one instance, retail users may be more willing to increase their amount of risk during high shopping seasons such as November and December but choose to set more conservative limits at other times of the year. In another instance, the time of the year in combination with a particular customer's purchasing and payment history may result in a higher threshold value compared to another customer with a less favorable payment history.

According to an aspect of the invention, threshold values can dynamically fluctuate as a function of the particular retail user. In addition to assessing customer payment histories and creditworthiness, other factors such as payment type, type of good/service, quantity of good, etc. can influence the threshold value as determined per user as well as the duration of that particular threshold. For example, the threshold value can have an effective date range, at the end of which, the threshold value is reassessed and adjusted, if necessary or desired, based on a reevaluation of the pertinent parameters.

In another aspect, the customer may be able to further delineate sub-threshold values based on a type of good, for instance. By way of example, imagine that a merchant sells various products such as food items, apparel, electronics, books, and music. In addition, a threshold value of $100 is set by the merchant for a particular customer, wherein the customer is billed as soon as a $100 worth of purchases are made and no further purchases can be made until a $100 payment is made. Given that the threshold value is set to $100, the customer can further delineate the allocation of the threshold value among the types of products offered for sale by the merchant. For example, a $30 threshold can be set for any non-food items ― meaning that $30 of the $100 threshold can be spent toward non-food items. Alternatively, the sub-thresholds can be percentage-based which can be useful since threshold values can vary. For instance, the customer can define that 30% of any threshold value can be spent on non-food items, or more specifically, on music.

It should be appreciated that the threshold value can refer to a monetary value or a resource value, whereby the resource value corresponds to any consumable unit of good, downloadable object, or usage that may or may not be rated. In addition, purchasable items (*e.g.*, resource usage) can be modeled as offers or events, the cost of which can be based on the value of each resource used. Resource usage can be recorded by a component and at some later time, the resource usage can be converted to a monetary value. Hence, in one aspect, events can be rated or pre-rated such that they are associated with a monetary value at the time of "purchase" by the customer. Alternatively, the monetary value associated with each "purchase" event can be assigned or attached to the resource usage or purchase at the time of billing (*e.g.*, charge credit card or payment requested from payment provider).

When a threshold value is reached, the customer's designated payment instrument can be debited or charged. However, when payment cannot be made by the customer or the customer's payment provider, various actions can be taken. For example, future purchase attempts can be denied such as until the requested payment is made. Furthermore, the threshold value can be decreased when purchasing capabilities resume if more than one attempt was required to obtain the payment. Warning messages can also be sent periodically to the particular customer notifying him/her of the status of his/her account as well as possible consequences resulting non-payment or late payments.

According to yet another aspect of the invention, it may be necessary to notify the user when they are nearing their threshold and request payment before the threshold is reached to avoid suspension of service. This can be applicable depending on the particular payment instrument employed to settle the user's account (*e.g.*, direct debit in some countries; push payment in Japan). As a result, other thresholds (in addition to the threshold charge amount) can be utilized such as a notification threshold and a suspension threshold. The notification threshold can correspond to an amount (*e.g.*, in terms of currency, points, and/or units) that is less than the threshold billing amount, whereby the user can receive a notice to settle his/her account before the threshold billing amount is reached or exceeded. Similarly, the suspension threshold can correspond to an amount (in terms of currency, points, and/or units) that is more than the notification threshold and/or the billing threshold, whereby the user account can be suspended as soon as the suspension amount is reached.

To the accomplishment of the foregoing and related ends, certain illustrative aspects of the invention are described herein in connection with the following description and the annexed drawings. These aspects are indicative, however, of but a few of the various ways in which the principles of the invention may be employed and the present invention is intended to include all such aspects and their equivalents. Other advantages and novel features of the invention may become apparent from the following detailed description of the invention when considered in conjunction with the drawings.

### BRIEF DESCRIPTION OF THE DRAWINGS

Fig. 1 is a high-level block diagram of a system that facilitates purchase consolidation and threshold billing in accordance with an aspect of the present invention.
Fig. 2 is schematic block diagram of a system that records customer resource usage and requests payment for resource usage when a threshold amount is reached in accordance with an aspect of the present invention.
Fig. 3 is a schematic diagram of exemplary factors that can influence a threshold value in accordance with an aspect of the present invention.
Fig. 4 is a flow diagram of an exemplary process that facilitates purchase consolidation and threshold billing in accordance with an aspect of the present invention.
Fig. 5 is a flow diagram of an exemplary process that facilitates purchase consolidation and threshold billing in accordance with an aspect of the present invention.
Fig. 6 is a flow diagram of an exemplary process continued from the process of Fig. 5 in accordance with an aspect of the present invention.
Fig. 7 is a flow diagram of an exemplary process continued from an aspect of the process of Fig. 6 in accordance with an aspect of the present invention.
Fig. 8 is an exemplary flow chart that facilitates threshold billing in accordance with an aspect of the present invention.
Fig. 9 is an exemplary environment for implementing various aspects of the invention.

### DETAILED DESCRIPTION OF THE INVENTION

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

As used in this application, the terms "component" and "system" are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

The subject invention can incorporate various inference schemes and/or techniques in connection with automatically determining a threshold value such as per customer (*e.g*., user). As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic ― that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

It is to be appreciated that the present invention can be utilized and implemented by any type of online service provider, merchant, retailer, vendor entity. It should also be understood that the term "customer" as employed in the instant invention can refer to any person or entity desiring to purchase and/or download any item(s) subject to a charge or fee for such purchase or download.

The present invention provides for a system and method that permit an online merchant or service provider to charge (*e.g.*, debit or bill) a customer's payment instrument (*e.g.*, bank account, credit card, debit card, credit balance on user account for merchant) when the customer has purchased a set value of goods. The set value of the goods corresponds to a threshold resource value. For example, a set value of goods, or threshold value, can be $10 of products or services. Thus, when the customer has purchased at least $10 of the product or service in either one event (*e.g.*, transaction) or over a number of events (*e.g.,* when accumulating the events), the designated payment vehicle is charged to settle the account with the merchant. Alternatively, the resource value can also correspond to a consumable unit such as minutes, points, units, and the like. Moreover, events can be stored and/or tracked over any period of time until a corresponding threshold resource value is reached, at which time payment is required and requested for such events.

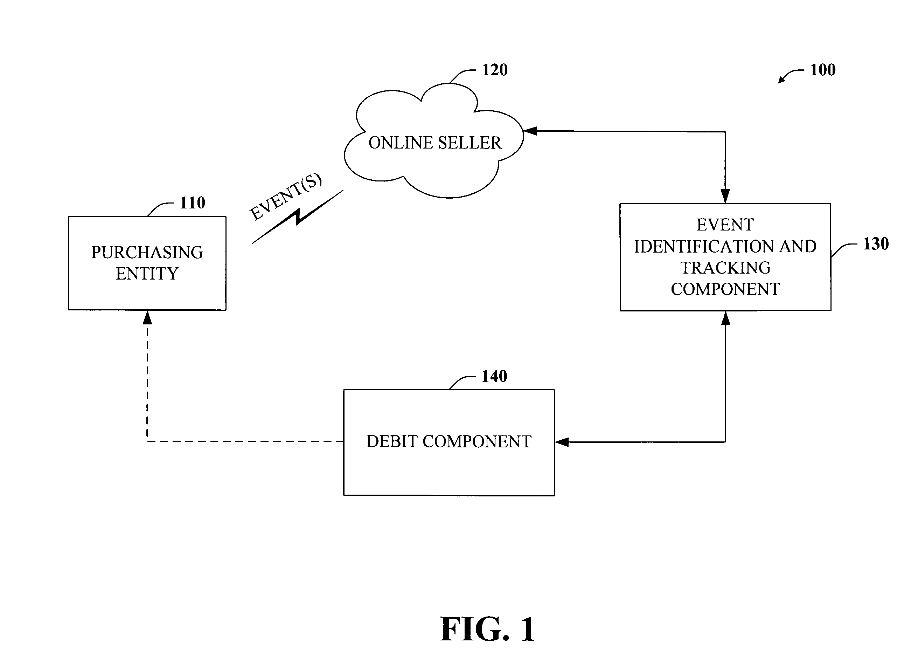

This scenario is schematically illustrated in Fig. 1. Fig. 1 demonstrates a high level block diagram of a threshold billing system 100 in accordance with an aspect of the present invention. In particular, a purchasing entity 110 (*e.g.,* customer, buyer, etc.) interfaces and/or communicates with an online seller or service provider 120. Communications received from the purchasing entity 110 by the online seller 120 can then be analyzed by an event identification and tracking component 130 to determine whether the communication from the purchasing entity 110 constitutes an event ― the event referring to a purchase or download of some resource(s) (*e.g.*, goods or services).

Assuming that a first event does not reach the threshold resource value, subsequent events (*e.g.*, second event, third event, etc.) in addition to the first event can be tracked and totaled by the event identification and tracking component 130. As soon as the events reach (or exceed) the threshold resource value, a debit component 140 can be signaled to charge the purchasing entity's payment instrument. Examples of a suitable payment instrument include a credit card, bank account (debit), and debit card. Alternatively, a credit balance (*e.g.,* stored value credit with merchant) can be maintained with the particular online seller 120 such that the billed amount can be deducted from the credit balance.

It should be appreciated that payment is sought for at least the threshold resource value whether it corresponds to a monetary value or a consumable unit. For example, if the threshold resource value refers to a monetary value (*e.g.*, $20), at least that amount is billed to the customer for immediate payment. However, when the threshold resource value is reached and exceeded (*e.g.*, last event brought the threshold resource value up from $15 to $35 and the threshold is $20), the whole balance (*e.g.*, $35) can be billed to the customer to bring the balance due down to $0. Alternatively, only immediate payment of an amount corresponding to the threshold value may be required at the seller's discretion. When the requested payment is received by the seller 120, (purchasing) events can resume between the purchasing entity 110 and the seller 120.

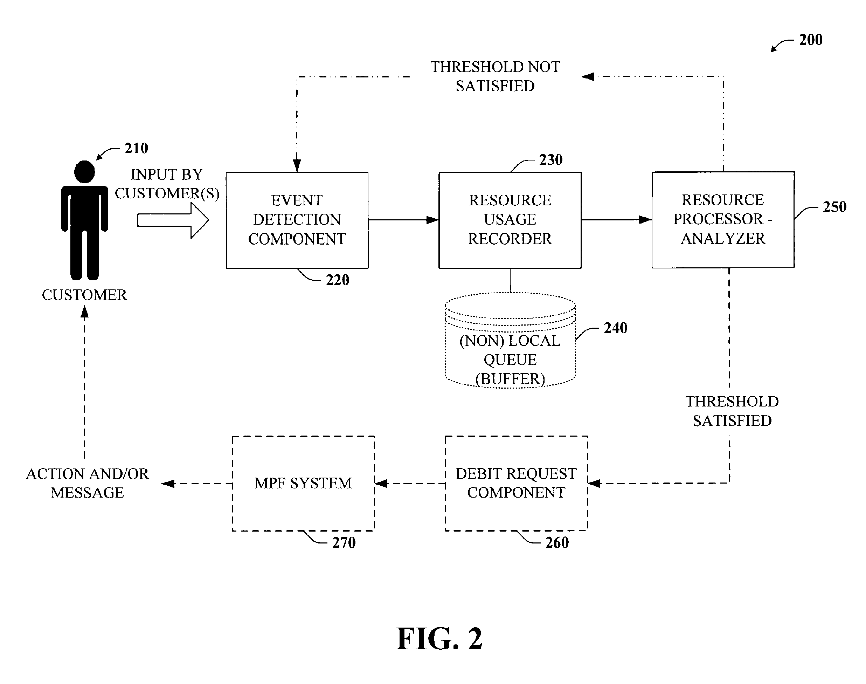

Referring now to Fig. 2, there is illustrated an online debit system 200 in accordance with an aspect of the present invention. The system involves interaction with one or more customers 210, whereby input can be received from the one or more customers in the form of event(s), for example. An event can refer to a purchase transaction or an attempt to make a purchase (*e.g.,* including downloads) by a customer or entity that may or may not be subject to threshold billing (*e.g.*, immediate payment of some amount such as at least the threshold value).

An event detection component 220 receives input from the customer 210 and detects whether the input constitutes an event subject to threshold billing scheme. An event can comprise objects to be purchased (*e.g*., resource usage), for example. If the input is identified or recognized as an event, a resource usage recorder 230 can record such usage of the respective resources. For example, if the resources are assigned a monetary value, then the corresponding value of resources can be recorded as being "used" with respect to a threshold resource value. That is, if the value of the resources used after 2 events have been recorded is $5 and the threshold resource value is $25, then the customer has $20 worth of resources to purchase before payment of at least $25 is required by the online merchant. This means that additional events can be initiated by the customer before the threshold is reached. As the events accumulate, they can be stored in a non-local queue 240 (*e.g.*, unrestricted buffer) to further improve system scalability and reliability.

Alternatively, if the resources relate to a consumable unit such as time or points, then the resources used thus far can be recorded and accumulated until the threshold resource value is reached. For example, imagine that the resources used refer to a number of hours and the threshold resource value is 50 hours; and when reached, the customer is charged $25.00. Therefore, if a first and a second event add up to 12 hours altogether (*e.g.*, 4 hours and 8 hours, respectively), the customer can still "purchase" or make use of 38 hours (*e.g.*, resource) before being charged $25.

A resource processor-analyzer 250 can determine whether the threshold resource value has been reached and/or exceeded by analyzing (*e.g.*, totaling) the content of the unrestricted buffer 240. If the threshold has not been satisfied, then the event detection component 220 can continue to detect and/or identify subsequent events carried out by the customer 210. However, if the threshold has been satisfied, a debit request component 260 can be signaled to asynchronously charge the customer at least a portion of the total amount of purchases from the unrestricted buffer 240.

At or about this time, the customer's account (*e.g.*, resource or user account) can be re-initialized or reset to some value to indicate that payment is being sought for at least a portion of the resources used (*e.g.,* objects downloaded or purchased). In some cases, this value can be zero which occurs when immediate payment for the total resource usage is requested. However, in other cases, the value can be negative such as if a first resource usage is free (*e.g.,* first 10 minutes are free or first $5 of purchase is free). Optionally, the value can be a positive, non-zero number which can indicate that payment was sought for only a portion of the total bill, whereby the remaining portion falls below the current threshold value. In this case, a balance may still be due to the online merchant and can be collected the next time the threshold value is reached.

For example, imagine that the threshold resource value is $50. When the customer spends $50 total across one or more purchases, their payment provider is charged $50. Hence, their account can be reduced to $0 if a $50 payment is charged to the payment instrument. Alternatively, their account can be reduced to -$5.00 to indicate that the first $5 of the resource is free. Finally, their account can be reduced to any amount under $50 such as $25 which means that a payment of $25 was charged to bring the customer below the threshold amount of $50. Therefore, the customer may be allowed to continue to shop until the $50 threshold is reached again. Optionally, if the customer's purchases totaled $65 (*e.g.*, purchase total increased from $45 to $65) and the threshold value is $50, at least a payment of $50 can be requested (*e.g.,* amount requested for payment corresponds to threshold value); thus, leaving $15 in the account (database) until the threshold value is again reached.

When the debit request component is signaled, an asynchronous charge request can be queued to a message processing facility (MPF) system 270, which can handle the execution of relatively arbitrary actions such as charge requests, for example. The MPF system 270 may be similar to a message queue.

Within the MPF system 270, such as in a different thread and/or on a different machine, a component of the MPF system picks up a pending charge action, locates the appropriate charge code to execute (*e.g*., via dynamic binding) and then calls that code. The asynchronous charge code can then read the charge record (*e.g.*, charge total or amount to be charged at the current time) from the unrestricted buffer 240 and attempt settlement against the payment provider (*e.g.*, credit card, bank account, stored value credit etc.) for the specified amount or for some portion of the total amount depending on merchant preferences.

If the charge succeeds, then it can be recorded as successful in the buffer 240 (or database). Following, a message can be sent to the customer to notify him/her that their payment instrument was charged and/or payment was made.

However, if the charge fails or is declined, then it can be recorded as a decline in the buffer 240; and a re-attempt to obtain payment can be scheduled for some time in the future and noted in the buffer 240 as well. As an additional consequence of the failed payment, the customer account can be suspended at least temporarily to stop further purchases or downloads to be made by the customer. In particular, the merchant or subscription service provider may receive notification of the failed payment by another asynchronous MPF action, which essentially informs the service provider to disable the service to the customer.

Subsequent charge attempts can be performed by way of a daily batch payment process. If the charge ultimately succeeds, then the customer's subscription or purchasing capabilities can resume (*e.g.*, reinstated). Otherwise, notifications of repeated declines can be sent to the customer. After a period of non-payment, the customer's subscription service or account can ultimately be cancelled.

Moreover, the present invention mitigates bad debt risks and losses to online merchants and/or service providers by requiring immediate payment or settlement of the user's account when a threshold value is reached. Furthermore, bank or credit card transaction fees and/or overhead costs can be minimized since purchases are consolidated (*e.g.,* consolidated purchases results in fewer credit card transactions and thus fewer credit card fees). Similarly, line item purchases on a credit card statement, for example, can be reduced by way of consolidating the transactions. Finally, charging can readily occur without increasing call latency for online merchant and service providers who are reporting the purchases which can contribute to the mitigation of merchant losses and bad debt risks.

As described above, the system 200, by way of the asynchronous charge code, attempts immediate settlement of the charge record. According to one aspect of the present invention, the system can also re-channel charges such as by employing a queuing-to-batch mechanism. For example, if a particular flag is set in the system, then the asynchronous charge code will not seek immediate settlement of the account. Instead, the recorded charge can be settled *via* regular batch payment processing within a day or so according to merchant or service provider preferences (*e.g.,* calling party preferences). Hence, immediate settlement of threshold billing can be turned off in case of possible problems such as when the payment provider cannot be contacted for immediate settlement.

Other options with which a merchant can settle the customer's charge include synchronous or immediate and/or batched processing (*e.g.,* along with other charges). The merchant, for example, can potentially choose any of the above options depending on customer profile, product being sold, the selling tenant, etc.

It should be understood that if accumulated charges do not reach a threshold within a particular time period (*e.g.*, 30 days), then the service provider or merchant can revert to charging the customer on a monthly basis, for instance.

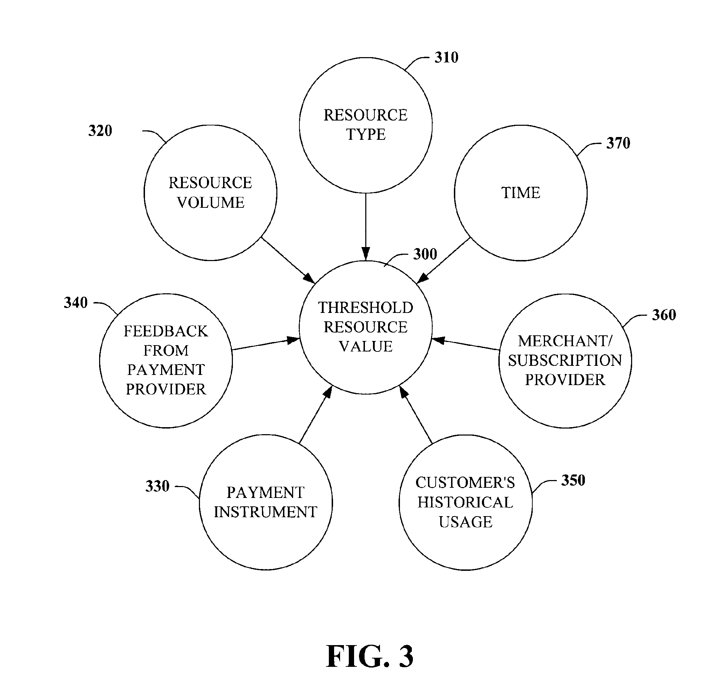

Turning now to Fig. 3, there is illustrated a schematic diagram of several exemplary factors that can influence the determination of a threshold resource value 300. For example, the type of resource being used or purchased by the customer (resource type 310) as well as the volume of usage of that resource (resource volume 320) can influence the setting of the threshold value 300. A song, for instance, is a type of resource that can be "used" by a customer (*e.g.,* downloaded). Downloadable songs can be relatively inexpensive per song. In addition, they can be downloaded in relatively large quantities by a single customer. Thus, the threshold maybe set high enough to permit multiple events of any number of downloads (per event) before payment is required.

Conversely, if the resource type refers to higher priced goods such as automobiles, then the threshold can be set high enough to allow the customer to purchase at least one automobile, but low enough not to allow the purchase of two cars before payment is required (*e.g.*, merchant may want to permit customer to buy and pay for only one vehicle at a time). In this particular case, volume may or may not be a factor considered by the merchant unless other parameters are considered such as payment instrument 330 (*e.g.*, credit card versus stored value account), feedback from the payment provider 340 (*e.g.,* customer has a good credit rating or history with bank or credit card), and/or the customer's historical usage and/or history with the merchant or service provider 350 (*e.g.*, customer's relationship with merchant). For example, the threshold may be set higher when the payment instrument is a stored value account meaning that the customer has a credit with the merchant. However, the threshold value can be set lower if the payment instrument is a credit card and the bank has commented (via feedback to the merchant) that the customer has had 2 late payments in the last 4 billing cycles, for instance.

Moreover, the threshold for low cost goods may be set high enough to allow a customer to download or purchase several items before the threshold is reached whereas the threshold for high cost goods may be set high enough to permit a one- or two-item purchase before payment is required. Hence, threshold values can vary between merchants 360 as well as between types 310 of resources offered by any one merchant. Because some merchants or service providers can offer a plurality of goods and services, the threshold value can also fluctuate based in part upon a customer's current subscriptions or current resource usage. For example, a customer with a threshold value of $100 for *W* products also desires to purchase *K* services from merchant *R.* Merchant *R* can set a higher threshold for *K* services for the customer based on the relatively high threshold the customer already has for *W* products. Conversely, a customer with a threshold resource value of only $10 for *W* products may not receive such a high threshold (*e.g.,* $100) for *K* services. Thus, the context of the customer is analyzed to facilitate determining an appropriate threshold resource value.

Finally, time 370 can be an additional parameter employed by merchants and service providers. For instance, some merchants and service providers may be less risk averse during high shopping seasons such as popular holiday months (*e.g.*, November and December). As a result, threshold values may be set higher during these months. On the other hand, merchants can be more risk averse in the months following a heavy shopping season such as January and February. Hence, thresholds may be set lower for that time.

Alternatively or in addition, higher thresholds can be set to coincide with customer's pay periods such as being higher at the beginning of the month (*e.g.,* receive paycheck) and lower at the end of the month (*e.g.*, after paying bills, less money left).

It should be appreciated that other parameters in addition to those discussed can be employed in the determination of the threshold resource values. It should also be appreciated that any one or combination of parameters can be utilized to determine a current threshold value.

Various methodologies in accordance with the subject invention will now be described via a series of acts. It is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

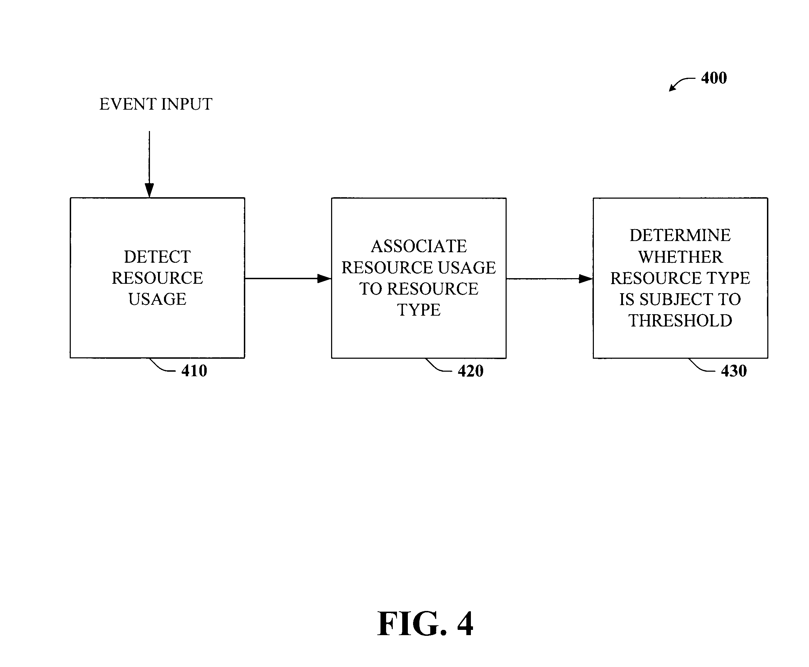

Turning now to Fig. 4, there is demonstrated a flow diagram of an exemplary method 400 that facilitates consolidation of resource usage to improve online billing schemes. According to the subject invention, input relating to an event (event data) such as a purchase and/or a download of goods or services is submitted by a customer, for example. At 410, the resource usage is detected and/or determined (*e.g.*, identified and/or quantified) by processing and/or analyzing the event data. The resource usage is associated with a resource type at 420. At 430, it can be determined whether the resource type is subject to a threshold resource value. Thus, not every resource type is subject to a threshold billing scheme (*e.g.,* immediate payment upon reaching a threshold is required) as determined by merchant preferences.

For example, some online retailers can require immediate payment on a per item basis for certain goods or services while on other goods, threshold billing limits are set to allow for consolidation of purchases over a period of time before the customer is actually charged such purchases. Similarly, some retailers may prefer to maintain billing on a monthly basis for some goods or services. For instance, an online newspaper may prefer to bill their customers on a monthly basis since access to and/or time spent logged onto the newspaper is unlimited per month. Therefore, multiple log-ons in any one-month period can be translated into resource usage terms (*e.g.*, number of log-ons, number of minutes spent logged on); however in this scenario, the associated resource type case is not subject to a threshold resource value.

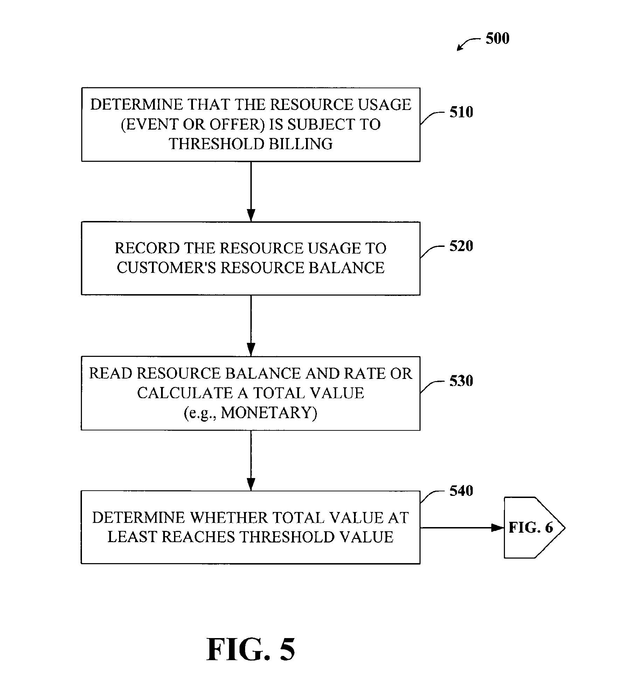

Figs. 5-7 represent a series of flow diagrams that depict exemplary processes that facilitate identifying and tracking resource usage, correlating current usage with previous usage and then charging a customer for the total amount of resources used when a . threshold resource value is reached. Any object, item, or service that is purchased or used by a customer for a fee can be considered a resource. Thus, resource usage refers to the use of a particular resource, wherein such use can be translated or converted to a monetary value for billing purposes. Some resources can be rated (*e.g.*, assigned a monetary value or a consumable unit value) when made available to the customer. Conversely, some other resources can be unrated when made available for consumer use or consumption. In these instances, the value of unrated resources can be determined or revealed when the threshold resource value is reached.

Referring now to Fig. 5, there is illustrated a flow diagram of a method 500 that facilitates identifying and tracking resource usage by a customer in accordance with an aspect of the present invention. The method 500 involves determining that the resource usage is subject to resource usage consolidation and threshold billing at 510. At 520, the resource usage can be recorded to the respective customer's resource balance. The resource balance can be read and then rated or converted to calculate a total value of the resource balance at 530. For example, a monetary value of the resource balance can be ascertained. At 540, the method 500 can determine whether the total value of the resource balance (*e.g.*, monetary value or consumable unit value) at least reaches the threshold resource value to warrant charging the customer (*e.g.*, for the total value of the resource balance).

Alternatively or in addition, the user can also be notified by a notification component that his/her resource balance is approaching the threshold resource value within a set range. For example, the method 500 may be programmed to send a notification to the user when the user is within Q units of his/her particular threshold resource value or balance. In this case, payment or settlement of the user's account can be required before the threshold resource value or balance is actually reached. This can applicable for those users who pay by direct debit or by push payment (*e.g.*, Japan).

Assuming that the total value does reach the threshold resource value in Fig. 5, the method 600 can follow therefrom to effectuate settlement or payment for resources that have been "purchased" but not yet paid for. The method 600 includes writing the debit or charge amount total to a database such as a non-local queue or unrestricted buffer that also serves as a storage and consolidation area for the "purchased" resources (at 610). The database can operate as a holding tank for such purchases until the total of the purchases is determined to at least reach the threshold resource value.

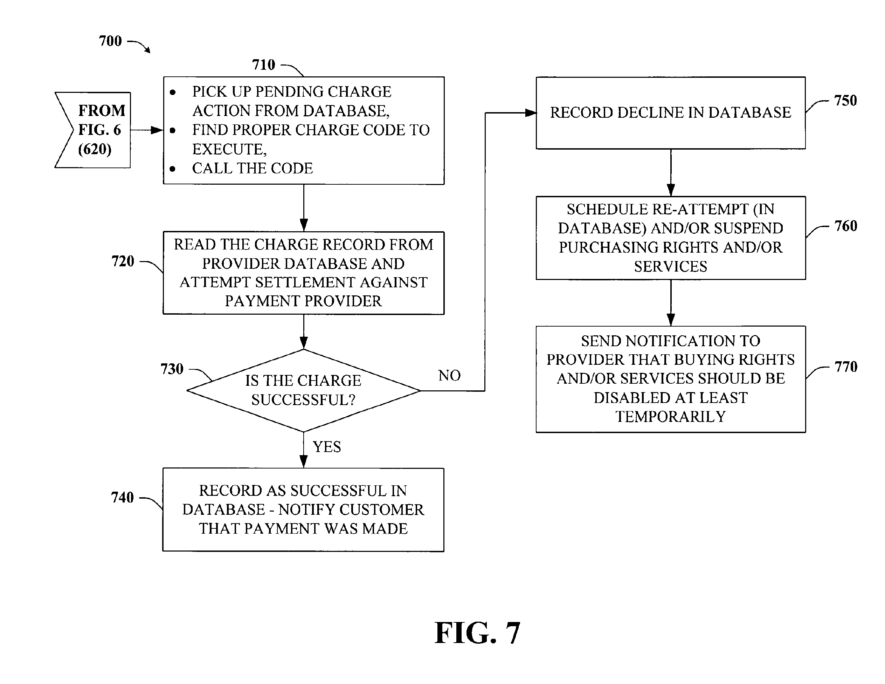

At 620, an asynchronous debit or charge request can be queued to an MPF system in order to effect at least a partial settlement of the customer's account (*e.g.,* to the extent that the resource balance falls below the threshold resource value). Further actions that can be taken by the MPF system are discussed in Fig. 7, *infra*. At 630, the customer's resource account can be reset to some value such as zero, for example, to indicate that prior resource usage or purchases have been paid for and that currently, no resources have been "purchased" by the customer or accumulated toward the threshold resource value.

At 640, a message, for example, can be sent to the merchant or service provider (*e.g.,* calling party) that the customer's resource usage has been recorded in the database. Depending on the merchant or service provider's preferences, the customer's resource account can be placed on hold until payment is confirmed. Alternatively, some merchants may allow some of their better customers to make use of a smaller amount of resources until payment is verified and confirmed. For instance, a better customer may be a customer who has historically provided timely payments with few if any charge failures.

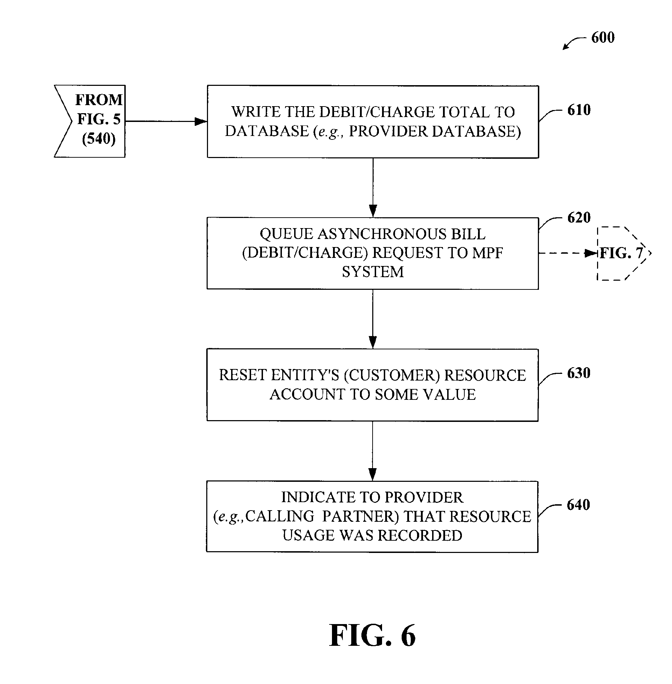

Referring now to Fig. 7, there is illustrated a flow diagram of an exemplary method 700 for processing a charge request in accordance with an aspect of the present invention. Recall that the charge request can be made as soon as a threshold resource value is reached (*see* Fig. 6, *supra*). The method can begin at about 710, wherein a pending charge request or action is picked up from the respective database or buffer; a proper charge code to execute is found or located and the code is called. At 720, the charge record (resource balance) can be read from the database to attempt settlement of at least a portion of the charge total against the designated payment provider. If the charge is successful (*e.g.*, payment is secured from the payment provider) at 730, then it can be recorded as a successful charge in the respective database at 740. The customer can also be notified that payment was made (*e.g., via* a notification component).

However, if the charge fails and the requested payment is declined at 730, then the decline is recorded in the respective database at 750. A re-attempt to process the charge can be scheduled at 760 and the customer's account (*e.g.*, purchase capabilities, access to subscription service) can be suspended until the charge is successful. As a result of the account suspension, a notification can also be sent to the merchant or service provider that any purchasing capabilities or services should be at least temporarily disabled at 770.

It should be appreciated that in any scenario where payment or settlement of the user's account is unsuccessful, a suspension threshold can be invoked. For example, the suspension threshold can refer to an amount or value of usage for which payment has not been received. Alternatively or additionally, the suspension threshold can correspond to a number of times payment has been requested but declined by the payment provider (*e.g.*, credit card, bank, etc.).

Moreover, instead of multiple charge transactions, purchases and/or charges are essentially consolidated into fewer charge transactions, which results in mitigating transaction overhead costs (*e.g.*, credit card fees) as well as customer time. In practice, imagine a music download retailer that provides a music download service. In order to improve customer experiences, customers can purchase and download songs without being impeded by a charge process at the end of every purchase. For example, in a conventional scenario, payment processing can entail an extra webpage or two as well as a few seconds to charge the customer's credit card. For customers who constantly return to purchase a couple songs now, a few more songs an hour later, even more songs 20 minutes later, and then even more the next day, drudging through the payment process for each purchase can be tedious and time-consuming. Simply charging per day or per month for accumulated purchases can be too risky since that could allow a customer to download a mass quantity of songs before the retailer discovers that he/she cannot pay for those downloaded songs. At this point, disabling further use of the service does not necessarily mitigate bad debt risk and economic losses. Furthermore, in the case of downloaded items, the customer has already received the benefit of the purchase and it can be nearly impossible to repossess such items.

According to the present invention, however, bad debt risk and potential economic losses can be mitigated at least to the extent of the threshold level. Because the present invention employs an asynchronous charging mechanism, customer credit cards, for example, can be charged at any time when the respective threshold is reached without increasing call latency for the merchants/retailers (*e.g.,* calling entities) that are reporting and recording the purchases.

Referring again to the music service example above, wherein huge quantities of songs can be purchased and downloaded by any one customer, the present invention makes use of an unrestricted buffer to handle potentially large-volume purchases via consolidation and to correlate them with previously consolidated purchases until the threshold is reached. As soon as the threshold is reached, regardless of the particular threshold value, the customer can be asynchronously charged.

The threshold can correspond to a resource usage (*e.g.*, quantity of resources used, purchased or consumed by the customer) whereby customer usage of a resource gets recorded. Once a threshold of resource usage is reached, a formula can be used to convert the resource usage to a monetary value and that amount is charged to the customer's payment provider. In this scenario, the resources (*e.g.,* presented in the form of an offer or event) are not immediately associated with a monetary value (*e.g.*, not pre-rated). Alternatively, the threshold can directly relate to a monetary value. For example, the threshold can be set to $25 so that when the customer spends up to $25 in resources, an immediate payment of $25 is requested. In this case, the resources would be pre-rated or associated with a cost when presented to the customer.

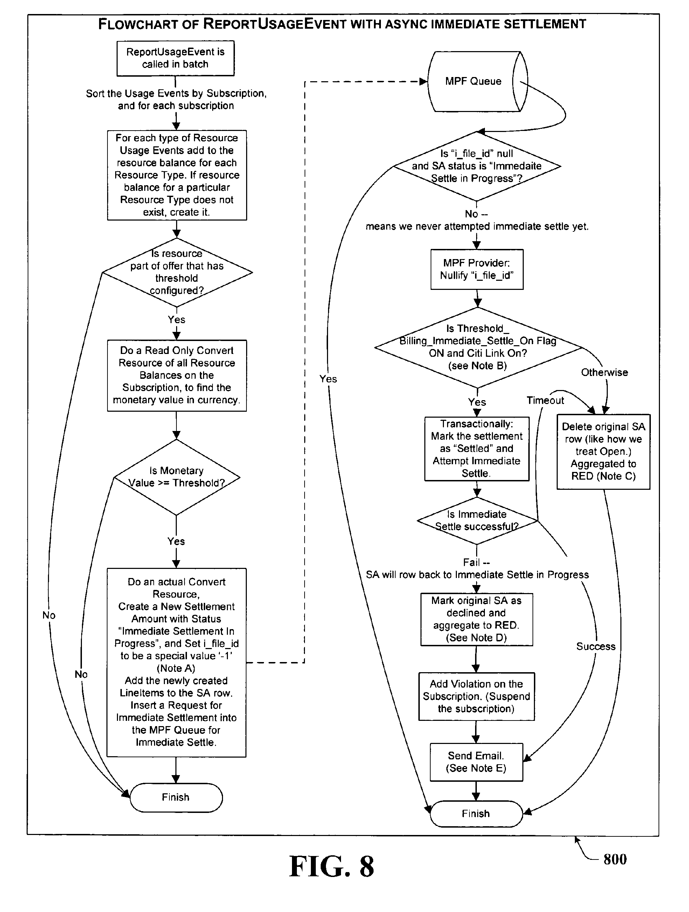

The subject invention can be carried out in part by employing a ReportUsageEvent call as schematically illustrated in the exemplary flow chart 800 of Fig. 8. The ReportUsageEvent call facilitates reporting and/or recording resource usage to a customer's (running total) resource balance until the threshold is reached. In conventional billing schemes, the running total resource balance would be maintained on a monthly basis, for example, if the customer was billed on a per-month basis. As can be seen by the flow chart 800 in Fig. 8, the ReportUsageEvent call operates in connection with an MPF (message processing facility) system, which is similar to a message queue, to obtain immediate settlement of the customer's account as soon as the threshold value is reached.

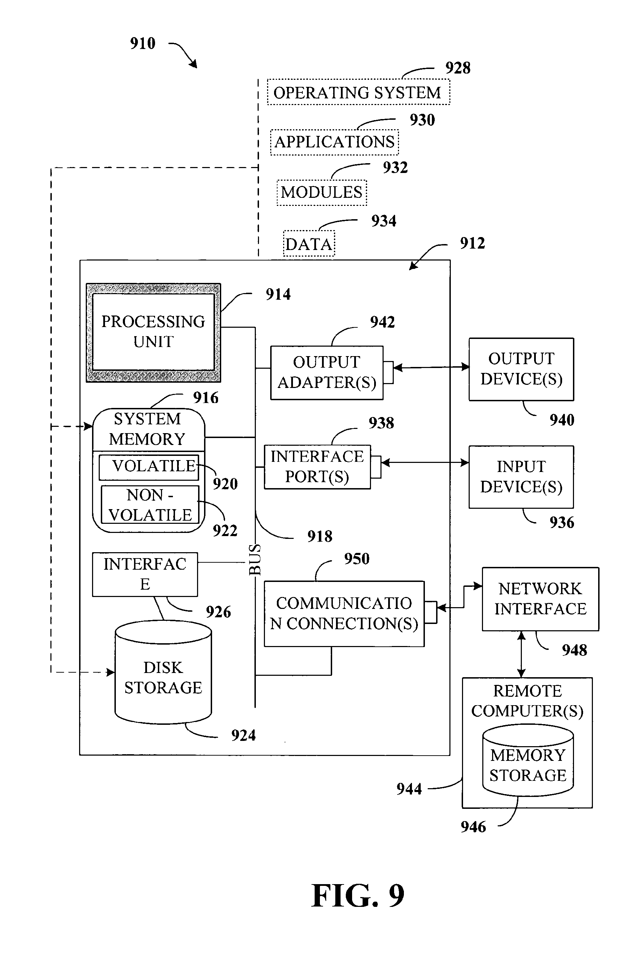

In order to provide additional context for various aspects of the present invention, Fig. 9 and the following discussion are intended to provide a brief, general description of a suitable operating environment 910 in which various aspects of the present invention may be implemented. While the invention is described in the general context of computer-executable instructions, such as program modules, executed by one or more computers or other devices, those skilled in the art will recognize that the invention can also be implemented in combination with other program modules and/or as a combination of hardware and software.

Generally, however, program modules include routines, programs, objects, components, data structures, *etc.* that can perform particular tasks or implement particular data types. The operating environment 910 is only one example of a suitable operating environment and is not intended to suggest any limitation as to the scope of use or functionality of the invention. Other well known computer systems, environments, and/or configurations that may be suitable for use with the invention include but are not limited to, personal computers, hand-held or laptop devices, multiprocessor systems, microprocessor-based systems, programmable consumer electronics, network PCs, minicomputers, mainframe computers, distributed computing environments that include the above systems or devices, and the like.

With reference to Fig. 9, an exemplary environment 910 for implementing various aspects of the invention includes a computer 912. The computer 912 includes a processing unit 914, a system memory 916, and a system bus 918. The system bus 918 couples the system components including, but not limited to, the system memory 916 to the processing unit 914. The processing unit 914 can be any of various available processors. Dual microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include read only memory (ROM), programmable ROM (PROM), electrically programmable ROM (EPROM), electrically erasable ROM (EEPROM), or flash memory. Volatile memory 920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 912 also includes removable/nonremovable, volatile/nonvolatile computer storage media. Fig. 9 illustrates, for example a disk storage 924. Disk storage 924 includes, but is not limited to, devices like a magnetic disk drive, floppy disk drive, tape drive, Jaz drive, Zip drive, LS-100 drive, flash memory card, or memory stick. In addition, disk storage 924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 924 to the system bus 918, a removable or non-removable interface is typically used such as interface 926.

It is to be appreciated that Fig. 9 describes software that acts as an intermediary between users and the basic computer resources described in suitable operating environment 910. Such software includes an operating system 928. Operating system 928, which can be stored on disk storage 924, acts to control and allocate resources of the computer system 912. System applications 930 take advantage of the management of resources by operating system 928 through program modules 932 and program data 934 stored either in system memory 916 or on disk storage 924. It is to be appreciated that the present invention can be implemented with various operating systems or combinations of operating systems.

A user enters commands or information into the computer 912 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 *via* interface port(s) 938. Interface port(s) 938 include, for example, a serial port, a parallel port, a game port, and a universal serial bus (USB). Output device(s) 940 use some of the same type of ports as input device(s) 936. Thus, for example, a USB port may be used to provide input to computer 912, and to output information from computer 912 to an output device 940. Output adapter 942 is provided to illustrate that there are some output devices 940 like monitors, speakers, and printers among other output devices 940 that require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912. For purposes of brevity, only a memory storage device 946 is illustrated with remote computer(s) 944. Remote computer(s) 944 is logically connected to computer 912 through a network interface 948 and then physically connected *via* communication connection 950. Network interface 948 encompasses communication networks such as local-area networks (LAN) and wide-area networks (WAN). LAN technologies include Fiber Distributed Data Interface (FDDI), Copper Distributed Data Interface (CDDI), Ethernet/IEEE 1102.3, Token Ring/IEEE 1102.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refers to the hardware/software employed to connect the network interface 948 to the bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A debit system comprising:
a detection component that detects events initiated by an entity to determine whether such events are subject to a threshold resource value; and
a debit component that charges the entity upon at least a subset of the events reaching the threshold resource value.

2. The system of claim 1, wherein the events are one of pre-rated or not pre-rated.

3. The system of claim 1, wherein the resource value corresponds to a monetary value.

4. The system of claim 1, wherein the resource value corresponds to a consumable unit.

5. The system of claim 1, the events referring to at least one purchase

6. The system of claim 1, the events comprising one or more resources for use by an entity whereby the detection component detects whether such resources are subject to the threshold resource value.

7. The system of claim 1, the events comprising at least a first event, the first event comprising at least a first resource, the first resource having at least one of a monetary value and a consumable unit value.

8. The system of claim 7, the events comprising at least a second event, the second event being different from the first event, the second event comprising at least a second resource, the second resource being different from the first resource and having at least one of a monetary value and a consumable unit value that is different from the first resource.

9. The system of claim 1, wherein any one event comprises a plurality of different resources having a plurality of different monetary values or consumable unit values.

10. The system of claim 1, the entity is a customer, the customer being any one of an individual, more than one person, a company, and a machine.

11. The system of claim 1, further comprising a tracking component that correlates a current event with previous events to track resource usage until the threshold resource value is reached.

12. The system of claim 1, the debit component requests payment from the entity's payment provider when the threshold resource value is at least reached.

13. The system of claim 1, wherein events incoming to the detection component are suspended at least until notification that payment was made is received to mitigate economic losses.

14. The system of claim 1, further comprising a notification component that notifies the entity of at least one of the following: that payment has been made; that payment has not been made; that the entity is suspended from further usage; and that the threshold resource value is within Q units, wherein Q is an integer greater or equal to one.

15. The system of claim 1, further comprising a query component that allows an external component to determine a state of the entity's account relative to the threshold resource value.

16. A system that facilitates online purchasing and bill management comprising:
a component that determines whether resource usage is associated with a threshold charge;
a resource usage recorder component that records the resource usage;
an analysis component that compares accumulated resource usage to a threshold resource value to determine whether the threshold resource value is reached; and
a payment component that requests payment for the resource usage when the threshold resource value is reached.

17. The system of claim 16, further comprising a resource balance that refers to a running total of the resource usage, whereby additional resource usage is added to the resource balance which is compared to the threshold resource value to determine whether to request payment for resources used thus far.

18. The system of claim 16, further comprising a component that consolidates at least one previous event of resource usage with a current event of resource usage.

19. The system of claim 16, further comprising a database operatively coupled to the resource usage recorder that stores at least one of purchase records, payment records, total purchase records, and resource usage records.

20. The system of claim 19, the database is a non-local queue.

21. The system of claim 19, the database is an unrestricted buffer that can store any amount of resources used or purchased.

22. The system of claim 16, further comprising a component that processes payment requests received from the payment component and that suspends accounts for which the payment request was declined.

23. The system of claim 22, the component is a message processing facility.

24. The system of claim 16, the threshold resource value is based at least in part upon one or more of the following factors:
type of resource;
volume of resource;
payment instrument;
feedback from payment provider;
entity's historical resource usage;
payment history;
goods or service provider preferences;
entity's preferences; and
time of resource usage.

25. The system of claim 16, the threshold resource value is adjusted periodically or randomly and manually or automatically.

26. A method that facilitates threshold billing comprising:
detecting at least a first event has been initiated by an entity;
determining that the first event is subject to a threshold resource value;
recording resource usage corresponding to the first event to a respective resource balance maintained in a database; and
determining whether the resource balances reaches the threshold resource value.

27. The method of claim 26, further comprising sending a payment request to payment provider when the threshold resource value is reached; and recording the payment request to the database.

28. The method of claim 27, further comprising resetting the respective resource balance when the payment request is sent.

29. The method of claim 27, the payment request comprises at least a portion of an amount due.

30. The method of claim 29, the amount due corresponding to at least a portion of the resource usage or the resource balance.

31. The method of claim 27, initiating the payment request comprising:
locating charge code corresponding to pending payment request, the payment request being associated with a charge record;
calling the charge code;
reading the charge record; and
attempting settlement of the payment request against the payment provider.

32. The method of claim 27, further comprising suspending access to resources when the payment request from the payment provider is declined.

33. The method of claim 27, the database is any one of the following: a non-local queue and an unrestricted buffer able to hold numerous events until the threshold resource value is reached.

34. The method of claim 32, further comprising scheduling at least one subsequent attempt to satisfy the payment request.

35. The method of claim 27, further comprising recording the payment request

36. A system that facilitates threshold billing comprising:
means for detecting at least a first event has been initiated by an entity;
means for determining that the first event is subject to a threshold resource value;
means for recording resource usage corresponding to the first event to a respective resource balance; and
means for determining whether the resource balances reaches the threshold resource value.

37. The system of claim 36, further comprising means for sending a payment request to payment provider when the threshold resource value is reached.

38. A computer-readable medium having stored thereon the computer executable components, the components comprising:
a detection component that detects events submitted by an entity to determine whether such events are subject to a threshold resource value; and
a debit component that charges the entity upon at least a subset of the events reaching the threshold resource value.

39. A computer-readable medium having stored thereon the computer executable components, the components comprising:
a component that determines whether resource usage by an entity is subjected to a threshold charge;
a resource usage recorder component that records the resource usage;
an analysis component that compares accumulated resource usage to a threshold resource value to determine whether the threshold resource value is reached; and
a payment component that requests payment for the resource usage when the threshold resource value is reached.

40. A data packet adapted to be transmitted between two or more computer processes facilitating identify potential spammers, the data packet comprising:
information associated with determining whether resource usage is associated with a threshold charge, wherein the resource usage is recorded and analyzed to ascertain whether accumulated resource usage reaches a threshold resource value; and
information corresponding to a request for payment for the resource usage when the threshold resource value is reached.
